# EUROPEAN PATENT APPLICATION

(11) **EP 4 014 961 A1**
(43) Date of publication of application: **22.06.2022**
(21) Application number: 21215769.7
(22) Date of filing: 17.12.2021
(51) Int. Cl.: A61K 8/98, B01D 71/56, C12M 3/00

(54) **PROCESS FOR THE DEPYROGENATION OF A SNAIL SECRETION AND RELATED PRODUCTION PLANT**

(30) Priority: 17.12.2020 IT 202000031283
(71) Applicant: Helixpharma S.r.l., 44121 Ferrara (IT)
(72) Inventor: ALOGNA, Andrea, 44123 FERRARA (IT); TRAPELLA, Claudio, 44124 FERRARA (IT); RIZZO, Roberta, 44122 FERRARA (IT); GENTILI, Valentina, 44122 FERRARA (IT)
(74) Representative: Coppo, Alessandro

(57) **Abstract**

The present invention relates to a process for making pyrogen-free the snail secretion and reducing the endotoxin content contained therein to a value equal to or lower than 0.25EU/ml, said process comprising a mechanical filtration step with a filtering system comprising at least one, preferably three, filtering cartridges with a nylon membrane, preferably positively charged, with a filtration degree in the range from 0.04 to 0.45 µm.

## Description

### FIELD OF THE INVENTION

The present invention relates to a process for making pyrogen-free snail secretion and a plant for the production thereof.

The present invention originates in the field of the processes for making pyrogen-free substances of natural origin that find application in the medical and/or cosmetic field.

In particular, the present invention relates to a process for removing from snail secretion contaminants such as endotoxins resulting from the breakdown of the cell membranes of gram negative bacteria, the presence of which can cause a rise in body temperature when the secretion is administered to a human being.

### PRIOR ART

The snail, also known as *Helix aspersa*, is a terrestrial gastropod mollusc that moves by means of an expanded foot on which its entire body rests and which represents its only locomotor structure.

Some glands are located in the mucous membrane of the foot which produce a transparent, dense and gelatinous secretion of mucopolysaccharide nature that makes the passage thereof fluid and allows it to adhere to the surfaces where it lies. This secretion also allows the snails to lubricate their bodies and to reduce friction on the ground surface, limiting the risk of abrasions and improving grip. Snails continuously produce this secretion.

The composition of the snail secretion has a high intrinsic variability linked to nutrition, as evidenced by Lorenzi and Martins in "Análise colorimétrica e espectroscópica do muco de caracóis terrestres Achatina sp alimentados com ração diferenciada". R. Bras. Zootec., v.37, no.3, p.572-579, 2008, to the extraction methods, the geoclimatic characteristics of the breeding, the seasonality and the species considered as described by Alogna A. and Trapella C. in "Valutazione della Variabilità biochimica della secrezione mucosa in diverse specie di gastropodi polmonati". AMS Lauree. 39-57; 2015.

Snail secretion is rich in proteins, mucopolysaccharides, minerals and macromolecules of high biological value and finds application in numerous sectors as a supplement, cosmetic or food product.

These properties make it suitable for the formulation of cosmetic creams with regenerating, moisturising, anti-wrinkle, anti-ageing and anti-stain action. Snail secretion also finds application in the treatment of acne signs and in the prevention and treatment of stretch marks and scars.

In the health sector, snail secretion finds application in the formulation of products with a mucolytic and expectorant action and as a gastro-protector with a soothing function on the gastric mucosa, as an antacid and anti-reflux agent.

Snail secretion is currently restricted in its use in the medical or aesthetic field due to the presence of pyrogenic substances, in particular bacterial endotoxins, which cause a rise in body temperature when injected or, in certain cases, when applied via certain specific routes of administration.

Some uses of snail secretion in the medical field, for example in ophthalmology or aesthetic medicine, are therefore precluded because the currently available products do not meet the requirements of apyrogenicity and sterility.

Current regulations concerning medicaments and injectable products of aesthetic medicine require sterility of the raw material and set a limit of LPS endotoxins in the range from 0.125 to 0.5EU/ml (depending on the regulation in question).

Currently, processes are known to sterilize/sanitise even natural products.

For example, amphiphilic non-denaturing solutions with a dual hydrophobic and hydrophilic nature, from 0.25% to 10%, have been developed for the treatment of non-protein biological and pharmaceutical products. The pyrogen-free products are then recovered by liquid phase separation.

A method is also known for sterilizing and making pyrogen-free fluids using complex systems that incorporate a device that heats pressurised fluids using suitable temperature, pressure and time to achieve the desired sterilization levels. Heat exchangers and valves to facilitate the flow of liquids within the system are included in this system.

However, these processes have the disadvantage of requiring the use of complex equipment that requires a costly management.

Moreover, conventional sterilization processes are aggressive and risk denaturing the snail secretion and depriving it of its unique biological activities and properties.

In an attempt to overcome this problem, a mechanical sterilization process has been developed that involves carrying out one or more steps of microfiltration of the secretion during which bacteria and contaminating particles are retained. However, it has been found that during conventional mechanical sterilization, lysis of bacterial membranes can occur with release of endotoxins and/or small lipopolysaccharides into the secretion.

There is therefore currently an unsatisfied demand for products of natural origin rich in biologically active substances, such as snail secretion, which can be obtained by a process and plant that are simple to produce.

An aim of the invention is to provide an apyrogenic snail secretion substantially free of lipopolysaccharides by avoiding an aggressive treatment that denatures the biologically active components thereof.

Another aim is to provide a substantially lipopolysaccharide-free apyrogenic snail secretion that is simple to produce and inexpensive.

A further aim of the present invention is to provide a process for obtaining a snail secretion which complies with the sterility and/or apyrogenicity limits laid down by the regulations in force for cosmetic products for injectable use and medicinal products, in particular for ophthalmic use.

### SUMMARY OF THE INVENTION

The inventors of the present study have developed a simple mechanical process to eliminate the endotoxins naturally present in the snail secretion by exploiting the characteristics of the filtering membranes and optionally the contact time of the secretion with the filtering surfaces.

The process of the present invention makes it possible to obtain an apyrogenic snail secretion by resorting to a mechanical processing step which preserves the bioactive molecules present.

In accordance with a first aspect, a process is provided for the depyrogenation of a snail secretion and reducing the endotoxin content to a value equal to or lower than 0.50 EU/ml, preferably lower than 0.25EU/ml, said process comprising a filtration step of the snail secretion in a filtering system comprising at least one filtering cartridge with a membrane preferably made of nylon, preferably positively charged, with a filtration degree in the range from 0.04 to 0.45 µm. Preferably the nylon filtering membrane has an absolute filtration degree of 0.2 µm.

In particular, the present invention relates to a process for the depyrogenation of a snail secretion and reducing the content of bacterial endotoxin lipopolysaccharides to a value equal to or lower than 0.50Eu/ml, preferably lower than 0.25EU/ml, said process comprising a mechanical filtration step of a sterilised snail secretion, in a filtering system comprising at least one filtering cartridge with a positively charged filtering membrane to interact with the phosphate groups of the bacterial endotoxin lipopolysaccharides, with a filtration degree in the range from 0.04 to 0.45 µm, wherein
- the flow rate is from 1 to 20 ml/min, expressed as the equivalent flow rate through a standard 254mm cartridge with a surface area of 0.79m²,
   and/or
- during filtration, the snail secretion remains inside each filtering cartridge for a period of time from 25 to 120 seconds, preferably from 40 to 80 seconds, to allow electrostatic interaction of the lipopolysaccharides with the positively charged filtering membranes and to reduce the content of bacterial endotoxin lipopolysaccharides to a value equal to or lower than 0.50EU/ml.

Advantageously, said process is carried out in a sterile environment, in particular under a hood with laminar flow, preferably in a clean room to completely eliminate possible sources of contamination.

The inventors have observed that the mechanical filtering action combined with the charge absorption of the positive zeta potential of the filter for a suitable period of time effectively removes the endotoxins associated with the bacterial cell membrane making the filtered snail secretion apyrogenic.

In accordance with an embodiment the process for making pyrogen-free snail secretion and/or reducing the content of bacterial endotoxin lipopolysaccharides to a value equal to or lower than 0.50Eu/ml, preferably lower than 0.25EU/ml, comprises a mechanical filtration step of the snail secretion which is sterilized in a filtering system comprising at least one filtering cartridge with a positively charged filtering membrane, preferably made of nylon, to interact with the phosphate groups of the lipopolysaccharides of the bacterial endotoxins, with a filtration degree in the range from 0.04 to 0.45 µm, wherein the snail secretion flows in the filtration step by means of a peristaltic pump with a low speed in the range from 1 to 20 rpm, preferably from 5 to 12 rpm, to have a suitable interaction time with the positively charged filtering membrane and to reduce the content of lipopolysaccharides (LPS) to a value lower than 0.50 EU/ml, preferably lower than 0.25 EU/ml.

Preferably, said process is carried out in a sterile environment, in particular under a hood with laminar flow.

In accordance with some embodiments, the filtering system comprises three filtering cartridges in sequence.

Preferably, the snail secretion is sterilized before undergoing the depyrogenation process.

The sterilization step can be carried out by mechanical filtration, for example as described in patent IT102017000117547 in the name of the same Applicant.

Another object of the present invention is a plant for the depyrogenation of a snail secretion and/or for reducing the content of bacterial endotoxin lipopolysaccharides to a value lower than 0.50EU/ml, preferably lower than 0.25EU/ml, said plant comprising a filtering system for removing or retaining bacterial endotoxin lipopolysaccharides LPS comprising at least one filtering cartridge, preferably three cartridges each cartridge connected to the other in sequence by means of one or more connecting pipes, wherein each cartridge is equipped with a positively charged filtering membrane, preferably made of nylon for example nylon 6.6, to interact with the phosphate groups of the bacterial endotoxin lipopolysaccharides LPS and with a filtration preferably with an absolute filtration degree of 0.2 micron, said system comprising a container containing the snail secretion to be treated, connected with connecting pipes to a peristaltic pump for feeding the system and for moving the snail secretion along the filtering cartridge(s) and connecting pipes

Preferably the filtering cartridges of the plant are arranged in a helical order. Advantageously, the plant comprises a hood with laminar flow.

The pyrogen-free snail extract obtained by the process described herein finds application in medicine, e.g. in aesthetic medicine, for example for intradermal or subcutaneous use.

The present invention will be described in detail below making reference to the accompanying figures.

### BRIEF DESCRIPTION OF THE DRAWINGS

Some characteristics and advantages of the present invention will become more evident from the attached drawing table in which:
Figure 1 illustrates an embodiment of a plant for making pyrogen-free a snail secretion;

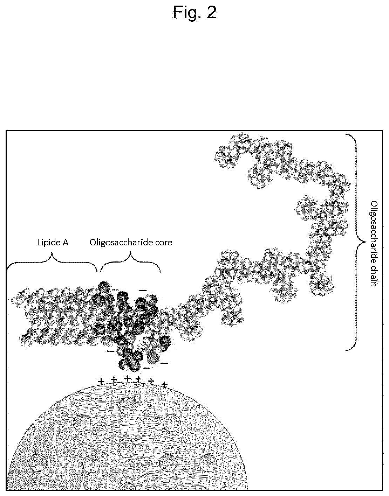

Figure 2 shows a detail of a positively charged filtering membrane made of nylon 6.6 according to an embodiment of the process of the invention;
Figure 3 shows microscopic images of the cell monolayer after scratch test;

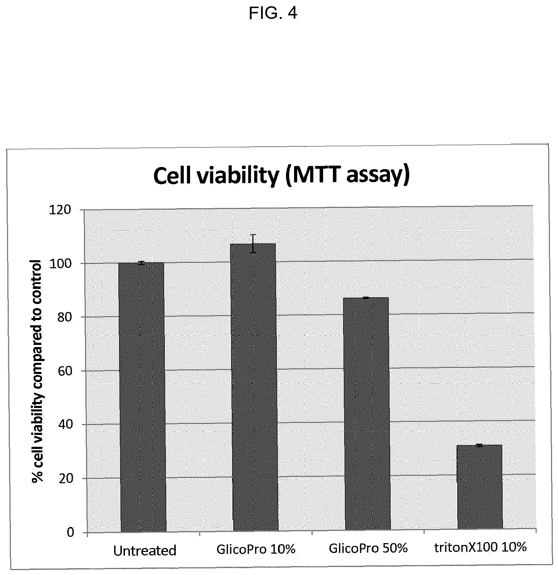

Figure 4 shows bar graphs illustrating the results of the cell viability assay performed on the human MRC-5 cell line by MTT assay described in Example 2.

### DETAILED DESCRIPTION OF THE INVENTION

The inventors have devised a process which, by means of a mechanical filtration step, makes it possible to obtain a pyrogen-free snail secretion that meets the regulatory requirements laid down for medicinal and aesthetic products that can be administered by hypodermic injection.

The depyrogenation process of the invention provides a pyrogen-free snail secretion substantially free of bacterial endotoxins which due to its properties finds application for human ophthalmic use or for subcutaneous use in aesthetic medicine.

In accordance with aspects of the invention, it has also been observed that by combining a mechanical filtration with the interaction of electrostatic charges between endotoxins (LPS) and cartridge, a pyrogen-free snail secretion is obtained which is substantially free of endotoxins detectable by the Limulus test (LAL test), as described below.

In accordance with an aspect, a process as defined in the appended claim 1 is provided.

Embodiments of the process of the invention are defined in dependent claims 2-9.

In particular, the process and the plant of the invention provide for a system of a plurality of filters in sequence, preferably three filters, each equipped with membranes with pores of selected calibre and with a positive charge to achieve a combined removal of the endotoxins.

The filtering component mechanically retains bacterial cell wall fragments and endotoxin vesicles resulting from the breakdown of the larger bacterial outer membrane.

This mechanical filtering capacity is increased by using filtering membranes with positive zeta potential that interact with the phosphate groups of the LPSs and block them.

The combination of charge absorption and mechanical retention effectively retains the endotoxins, providing a pyrogen-free effluent with an endotoxin content equal to or lower than 0.25EU/ml.

The endotoxins retained by the filtration process are based on lipopolysaccharides (LPS) derived from the breakdown of the outer membranes of gram-negative bacteria. In particular, LPSs comprise a fatty acid-based component, known as Lipid A, which is responsible for their toxicity, and a polysaccharide component which mainly affects solubility. The two components are covalently linked by an oligosaccharide core in which phosphate groups are often present. When the bacterium dies and the membranes break down, these molecules are released and can even be fatal when present in high concentrations in a product intended for parenteral administration, as they are able to act on the hypothalamic centres responsible for thermoregulation.

In accordance with an embodiment, the snail secretion is sterilized before being depyrogenated with the process of the invention.

In accordance with an aspect of the invention, there is provided a plant for making pyrogen-free snail secretion suitable for reducing the content of lipopolysaccharides or bacterial endotoxins to a value equal to or lower than 0.25EU/ml as defined in claim 9. In accordance with some embodiments, the content of the lipopolysaccharides of the snail secretion is reduced to a value equal to or lower than 0.125EU/ml.

Further aspects and advantages of the invention become more evident from the description of the following embodiment and test of the plant of the invention.

### MATERIALS

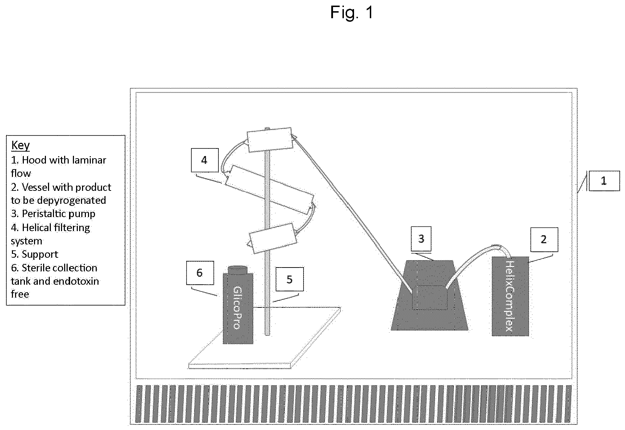

As illustrated in Figure 1, the plant comprises a container (2) containing the snail secretion to be depyrogenated connected by means of a connecting tube to a peristaltic pump (3) which moves the snail secretion along a filtering system (4) and the connecting pipes.

The peristaltic pump (3) is connected by a connecting pipe to the preferably helical filtering system (4) comprising three filtering cartridges positioned in sequence and by a vertical support (5). Advantageously, the filtering system comprises a first (proximal) cylindrical cartridge 158 mm in length, a second (intermediate) cylindrical cartridge 286 mm in length and a third (distal) cartridge 158 mm in length which are connected by pipes in which the snail secretion flows.

Preferably each filtering cartridge comprises one or more filtering membranes made of nylon equipped with a polyester support and with a filtration degree in the range from 0.04 to 0.45 µm, preferably 0.2 µm.

Advantageously, the nominal (total) filtering surface of the three cartridges is comprised between 6000 and 7400cm², preferably it is 6800 cm².

Typically, the distal cartridge is equipped with a nozzle from which the depyrogenated filtered secretion outflows and which is collected in an apyrogenic container (6).

Preferably, the filtering membranes contained in the cartridges are made of 6.6 hydrophilic nylon and contain quaternary ammonium groups along the membrane structure. In the presence of a water-based liquid, these groups provide a positive zeta potential, which helps remove negatively charged contaminants such as bacterial endotoxin LPSs even if these are smaller in size than the mechanical removal degree of the filtering system. This results in an effluent secretion from the filtering system free of LPSs detectable by the LAL test.

Preferably all elements (2-6) of the plant described herein are in a sterile environment, advantageously positioned under a hood with laminar flow (1).

### METHODS

Three samples were subjected to the depyrogenation treatment as described herein. The plant was fed with the three samples separately, each consisting of 100 ml of unfiltered snail secretion. The three samples had an LPS content of bacterial endotoxins of 23100; 21350 and 20580EU/ml respectively.

The plant in Figure 1 was fed with each of three samples of snail secretion

Tests were carried out with a flow rate of 20 ml/min, moved by peristaltic pump.

### RESULTS

At the end of the process, each of the three samples was collected and analysed using LAL tests.

The LAL test was performed with 1:50 sample dilutions using LAL grade water. 16 well plates contained standard endotoxin control (from 100 EU/ml to 0.001 EU/ml) diluted samples, and diluted samples contaminated with 1 EU/ml to assess the presence of interfering factors. Reconstructed LAL reagent (PYROSTAR^{™} ES-F) was then added to each well and immediately measured with a microplate reader. A kinetic turbidimetric analysis was carried out. The appearance of turbidity was measured immediately. The honesty time is inversely related to the amount of endotoxin in the sample, so that the endotoxin levels in the samples were determined by comparison with a standard curve. The sensitivity of the method (lambda) is the lower point of the standard curve (0.001 EU/ml).

Each of the three samples tested had an endotoxin LPS content lower than 0.50EU/ml. In accordance with some embodiments, the plant described herein is fed with a sterile or sanitised snail secretion. A suitable sterilization process comprises a first step of microfiltration of the snail secretion in a sterile environment, preferably under a hood with laminar flow.

For example, the snail secretion is microfiltered (0.22 µm) in a sterile environment under a class II hood with laminar flow with autoclavable filters. The vertical hood with laminar flow allows working in a sterile environment, e.g. thanks to the presence of a Class H14 HEPA absolute filter, and handling various materials.

Advantageously, the hood is equipped with a UV-C lamp that allows the sterilization thereof after use.

In some embodiments, the filter comprises an inlet pipe into which the secretion is conveyed to be microfiltered by means of glass fibre filters, e.g. 0.22 micron filters arranged radially around a central axis, and an outlet pipe from which the secretion outflows to be conveyed into sterile containers.

The secretion can be conveyed towards the filter by a peristaltic pump, which, through a compression and relaxation movement of the pipe, imparted by a rotating cylinder with adjustable speed, collects the secretion from the collection vessel and pushes it under pressure into the filter. A peristaltic pump of this type can be used in the depyrogenation process described herein.

Typically, the sterilized snail secretion is then collected to be transferred to a depyrogenating filtering system as described herein.

For example, in the transfer step, the sterilized microfiltered secretion is conveyed in a sterile manner into a second filtering system by a peristaltic pump at a low speed, e.g. 1-10 rpm, to allow a prolonged interaction time with the membranes.

The depyrogenation process described herein has the advantage of obtaining a pyrogen-free snail secretion that meets the requirements laid down for products for medical use, e.g. for ophthalmic use.

To verify these requirements, the Applicant has developed a system for validating the depyrogenation process described herein.

The validation overcomes the problem of false positives due to the presence of mucopolysaccharides and other interfering substances with the normal endotoxin detection systems of LAL (Lymulus Amebocite Lysate).

A suitable validation test is the Wako Pyrostar ES-F kit from Fujifilm Wako Pure Chemicals Corporation.

This is supplemented with substances, such as curdlane, which are able to neutralise the interfering molecules, such as (1-3) β-D-Glucan which gels normal LAL gel-clot assays, mimicking the presence of LPS.

The snail secretion sample, after filtration, is tested by means of a kinetic turbidimetric test by measuring the formation of turbidity over time by means of a turbidimeter. The higher it is, the more contaminated the sample. Conversely, if the sample does not become cloudy then the sample is apyrogenic and the batch validated. The sensitivity of this kit ranges from 0.01 to 10eu/ml.

Advantageously, the presence of endotoxins in a sample before and after treatment with the method of the invention can be provided by the method known as Limulus Amebocyte Lysate (LAL) analysis.

For example, to verify the depyrogenation efficiency of the process of the invention in reducing the LPS content of bacterial endotoxins to values lower than 0.50 EU/ml, a method for detecting bacterial endotoxins is used e.g. Limulus amebocyte lysate (LAL) analysis using a bacterial endotoxin detection reagent containing Limulus Amebocyte Lysate, Carboxy-methylated curdlan (CMC), buffers, monovalent and/or divalent cations, specifically PYROSTAR^{™} ES-F series, as described in https://www.wakopyrostar.com/blog/kit-lal/post/kinetic-turbidimetric-lal-method-for-endotoxin-detection-pyrostar.

Suitable gel cloths comprise PYROSTAR^{™} ES-F with a sensitivity of 0.015 EU/mL. These reagents (https://labchem-wako.fujifilm.com/asia/lal/products/pyrostar esf.html) are LAL specific and are suitable for qualitative detection of endotoxins by gel-clot or quantitative detection by turbidimetric kinetic methods.

Using LAL analysis on snail secretion, whose initial level of bacterial endotoxins LPS is 20000 EU/ml, with the process of the invention this level was reduced to values lower than 0.50 EU/ml, specifically 0.022EU/ml.

A further example of a suitable protocol is described by Ariane C S Marinho, Ana R O Polay, Brenda P F A Gomes in Accuracy of Turbidimetric Limulus Amebocyte Lysate Assay for the Recovery of Endotoxin Interacted with Commonly Used Antimicrobial Agents of Endodontic Therapy. J Endod 2015 Oct;41(10): 1653-9, 2015.05.020. E-pub 2015 Aug 5.

Advantageously, the snail secretion obtained with the process of the invention is sterile and suitable for applications in the medical field, in particular in the ophthalmic field and in injectable products for medical and/or cosmetic or aesthetic use.

These products are in fact regulated by a stringent legislation, precisely because of the sites where they are used.

For example, the endotoxin limit set by the FDA is 0.125eu/ml and 0.5eu/ml according to the European Pharmacopoeia for water for injection.

The process described herein has the advantage of preserving the biologically active molecules of the secretion, as they do not undergo any thermal stress.

A further advantage is that it is time-saving and cost-effective, as the process does not require large plants or particular systems. For example, the process can be implemented by having a sterile hood and a peristaltic pump or other type of pump capable of operating at low speed.

### EXAMPLE 1

The following describes some tests conducted on pyrogen-free snail secretion as described herein and named GlicoPro.

### Premises

The term "sterile" refers to a device or substance that is devoid of viable organisms. In particular, a device or substance is defined as "sterile" when it can be assured and certified on a statistical basis that the probability of it not being sterile is equal to or lower than 1 probability per 1,000,000, i.e. a SAL (Sterility Assurance Level) of 10⁻⁶. Sterilization processes can be carried out by irradiation through ionising radiations (Beta or Gamma rays) or through Ethylene Oxide and are validated and monitored in accordance with ISO 11137, ISO 11737, EN 552, F.UI:XI and F.EU:IV standards.

The term apyrogenicity or non-pyrogenicity refers to substances or devices in which endotoxins from Gram-negative bacteria are at or below the current legislation.

In particular, for devices declared to be apyrogenic, the limit is ≤ 0.125 EU/ml (EU= Endotoxin Units) FDA. The detection of the endotoxins is carried out by LAL Test.

### Test purposes

Sterilized and pyrogen-free snail secretion, called GlicoPro, is obtained by the depyrogenation process according to an embodiment described herein.

The secretion was tested to assess the safety and efficacy of its use in ophthalmic field.

Epithelial cells from the outermost layer of the eye were used to assess their behaviour.

### Method and materials

An MTT test was conducted to verify that the product was not cytotoxic. After growing the confluent cells in 96-well plates, after the time necessary for the cells to adhere has elapsed, a quantity of GlicoPro was added in two different concentrations, 10% for real applications and 50% for excess, the whole incubated for 3 hours at 37°C, 5% CO2.

The treatment was left for 24 hours, at the end of which the MTT assay (Cell Proliferation Kit I, Roche) was performed following the manufacturer's protocol. The cell viability assay was performed on MRC-5 cells (ATCC^{®} CCL-171; human fibroblast line) by MTT assay.

At the end of the incubation, the cell viability of the culture was assessed colorimetrically at 570nm by means of a microplate reader.

The results are interpreted as % cell viability compared to the untreated control. A substance is considered toxic when cell viability decreases below 80%. The results obtained show that GlicoPro is non-toxic on MRC-5 cells up to a concentration of 50%.

### Results

| Sample | % Cell viability | % Compared to st dev control |
|---|---|---|
| Not treated | 100 | 0.566 |
| GlycoPro 10% | 106.8 | 3.34 |
| GlycoPro 50% | 86.27 | 0.21 |
| tritonX100 10% | 30.83 | 0.46 |

### EXAMPLE 2

The presence of a series of special characteristics that make the pyrogen-free snail secretion as described herein (GlicoPro) suitable for use in eye drops or other ophthalmic preparations for regenerating the corneal epithelium after surgery or following non-deep injuries to the eye has been assessed in addition to the test described below also by using human corneas in which pathological conditions have been artificially induced (the results at the time of filing this patent application are still being finalised).

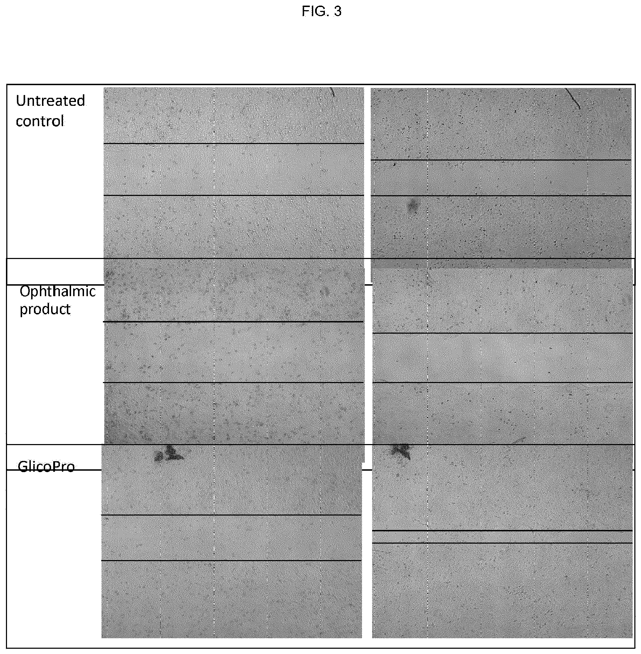

GlicoPro compared to an ophthalmic solution and an untreated sample showed a regenerative capacity in an in vitro assay conducted on a human keratinocyte cell monolayer (HaCaT ATCC^{®} PCS-200-011^{™}) equal to nearly 59%, as seen in the image in Figure 3.

| | % reduction of the area | Standard deviation |
|---|---|---|
| Untreated control | 31.14 | 0.522 |
| Ophthalmic product | 13.29 | 4.288 |
| GlicoPro | 58.97 | 12.858 |

## Claims

1. A process for the depyrogenation of a snail secretion and reducing the content of bacterial endotoxin lipopolysaccharides to a value equal to or lower than 0.50EU/ml,, said process comprising a mechanical filtration step of the snail secretion which is sterilized, in a filtering system comprising at least one filtering cartridge with a positively charged membrane to interact with the phosphate groups of the bacterial endotoxin lipopolysaccharides, with a filtration degree in the range from 0.04 to 0.45 µm, **characterised in that**
the flow rate is from 1 to 20 ml/min, expressed as the equivalent flow rate through a standard 254mm cartridge with a surface area of 0.79m²,
and/or
during filtration, the snail secretion remains inside each filtering cartridge for a period of time from 25 to 120 seconds.

2. The process according to claim 1, wherein the filtering membrane is made of nylon, preferably with an absolute filtration degree of 0.2 µm.

3. The process according to claim 1 or 2 wherein the snail secretion flows in the filtering system by means of a peristaltic pump at a low speed in the range from 1 to 20 rpm, preferably from 5 to 12 rpm.

4. The process according to any one of claims 1 - 3 wherein the filtering system comprises three filtering cartridges connected by pipes, preferably two 158 mm cartridges and one 286 mm cartridge, the latter cartridge being positioned between the other two cartridges.

5. The process according to any one of the preceding claims, wherein the nominal filtering surface is comprised in the range from 6000 to 7400 cm² and preferably is 6800 cm².

6. The process according to any one of claims 1- 4, wherein each filtering cartridge comprises at least one layer of Nylon membrane with polyester support, a polyester terminal part, a central part and a cage in polypropylene, a polyester outer shell and preferably a gasket and a vent ring seal in ethylene propylene.

7. The process according to any one of claims 1-5, wherein the snail secretion flows to the mechanical filtration step by a peristaltic pump with a low speed in the range from 1 to 10 rpm, to allow a time of interaction with the filtering membranes, to reduce the content of lipopolysaccharides deriving from bacterial endotoxins to a value equal to or lower than 0.25 EU/ml.

8. The process according to any one of the preceding claims, comprising a preliminary step of sterilization of the snail secretion comprising a step of microfiltration in a sterile environment, preferably with a filter in the range from 0.20 µm to 0.24 µm, wherein preferably the snail secretion is pushed towards the filter by a peristaltic pump.

9. A plant for the depyrogenation of a snail secretion and reducing the content of bacterial endotoxin lipopolysaccharides to a value equal to or lower than 0.25 EU/ml, said plant comprising
a filtering system for removing and/or retaining bacterial endotoxin lipopolysaccharides comprising at least one filtering cartridge, **characterised in that** the cartridge is equipped with
a filtering membrane positively charged to interact with the phosphate groups of the bacterial endotoxin lipopolysaccharides, and having a filtration degree in the range from 0.04 to 0.45 µm.

10. The plant according to claim 9 comprising a peristaltic pump with a low speed in the range from 1 to 20 rpm to slowly let the snail secretion flow in the filtering cartridge to allow electrostatic interaction of the lipopolysaccharides with the positively charged filtering membranes and to reduce the content of bacterial endotoxin lipopolysaccharides.

11. The plant according to claim 8 wherein the filtering system comprises three filtering cartridges positioned in sequence, said cartridges being connected by pipes in which the snail secretion flows, wherein the filtering membranes are made of nylon and have an absolute filtration degree of 0.2 µm.

12. The plant according to claim 9 or 10 **characterised in that** the filtering cartridges are arranged in a helical order and are supported by a support element.

13. The plant according to any one of claims 9-12 comprising a hood with laminar flow.
